# EUROPÄISCHE PATENTANMELDUNG

(11) **EP 3 653 907 A1**
(43) Veröffentlichungstag der Anmeldung: **20.05.2020**
(21) Anmeldenummer: 18206529.2
(22) Anmeldetag: 15.11.2018
(51) Int. Cl.: F16H 57/021, F16C 35/073, F16C 35/077, F03D 80/70, F03D 15/00, F16C 19/54, F16C 35/04

(54) **LAGERKASSETTE FÜR WINDKRAFTANLAGEN**

(71) Anmelder: ZF Friedrichshafen AG, 88046 Friedrichshafen (DE); ZF Wind Power Antwerpen NV, 3920 Lommel (BE); VESTAS WIND SYSTEMS A/S, 8200 Aarhus N (DK)
(72) Erfinder: De Laet, Wim, 2000 Antwerpen (BE); Adriaensen, Kris, 3920 Lommel (BE); Boonen, Andries, 3920 Lommel (BE)
(74) Vertreter: ZF Friedrichshafen AG

(57) **Zusammenfassung**

Die Erfindung betrifft ein Getriebe (103) aufweisend eine gehäusefeste Struktur (115) und eine Lagerkassette (107) mit einem Lagersitzring (109) und mindestens einem Lager (111); wobei eine Ausgangswelle (113) des Getriebes (103) mittels des mindestens einen Lagers (111) drehbar in dem Lagersitzring (109) gelagert ist. Die gehäusefeste Struktur (115) bildet eine erste Stützfläche; wobei die erste Stützfläche den Lagersitzring (109) von außen umschließt und mindestens radial fixiert.

## Beschreibung

Die Erfindung betrifft ein Getriebe nach dem Oberbegriff von Anspruch 1.

Die Druckschrift US 9 151 275 B2 offenbart ein Getriebe mit integriertem Generator für eine Windkraftanlage. Ein hohlzylindrischer Gehäusefortsatz erstreckt sich zwischen Getriebe und Generator und dient der Lagerung eines Rotors des Generators und einer Ausgangswelle des Getriebes. Der hohlzylindrische Fortsatz ist getriebeseitig mit einer Gehäusestruktur verschraubt. Die Verschraubung befindet sich in einem Gehäuse des Generators, das dessen Rotor kapselt, und ist nicht von außen zugänglich. Es ist daher nicht möglich, den hohlzylindrischen Fortsatz für Wartungs- oder Reparaturarbeiten zu entfernen.

Der Erfindung liegt die Aufgabe zugrunde, ein Getriebe verfügbar zu machen, das die den aus dem Stand der Technik bekannten Lösungen innewohnenden Nachteile nicht aufweist. Insbesondere soll die Zugänglichkeit im Wartungs- und Reparaturfall verbessert werden.

Das Getriebe weist eine gehäusefeste Struktur und eine Lagerkassette auf. Bei der gehäusefesten Struktur handelt es sich um ein Bauteil, das in einem Gehäuse des Getriebes starr, d.h. ohne die Möglichkeit einer Relativbewegung, fixiert ist. Insbesondere können die gehäusefeste Struktur und das Gehäuse des Getriebes einstückig miteinander verbunden sein.

Eine Lagerkassette ist eine Anordnung, die einen Lagersitzring und mindestens ein Lager aufweist. Ein Lagersitzring ist eine Komponente, die einen Lagersitz, d.h. eine Vorrichtung zur Fixierung mindestens einer äußeren oder inneren Lagerschale mindestens eines Lagers bildet. Bevorzugt hat der Lagersitzring eine zu einer Drehachse des Lagers rotationssymmetrische Grundform. Die Grundform eines Körpers bezeichnet die Form eines ursprünglichen Körpers, aus dem der erstgenannte Körper durch Eliminieren einzelner Bereiche, etwa durch Einfügen von Aussparungen, und/oder durch Hinzufügen einzelner Bereiche entsteht.

Eine Ausgangswelle des Getriebes, d.h. die in einem von dem Getriebe zu übertragenden Drehmomentfluss am weitesten flussabwärts befindliche Welle des Getriebes, ist mittels des mindestens einen Lagers drehbar in dem Lagersitzring gelagert. Entsprechend ist ein Lagerring des Lagers, vorzugsweise dessen Innenring auf der Welle fixiert.

Erfindungsgemäß bildet die gehäusefeste Struktur eine erste Stützfläche für den Lagersitzring. Die erste Stützfläche umschließt den Lagersitzring von außen und fixiert ihn mindestens in radialer Richtung, d.h. orthogonal zu einer Drehachse des mindestens einen Lagers. Bevorzugt erfolgt die Fixierung in jede radiale Richtung. Entsprechend verläuft die erste Stützfläche bevorzugt um den Lagersitzring herum und ist in sich geschlossen. Der Lagersitzring befindet sich innerhalb der ersten Stützfläche.

Die Erfindung ermöglicht es, den Lagersitzring zu Montage- und Wartungszwecken in einer axialen Bewegung einzusetzen und zu entnehmen. Darüber hinaus stabilisiert die Stützfläche den Lagersitzring und wirkt lastbedingten Verformungen der Lagerkassette entgegen.

Bevorzugt ist die gehäusefeste Struktur mit einer zweiten Stützfläche weitergebildet. Auch diese umschließt den Lagersitzring von außen und fixiert ihn mindestens in radialer Richtung. Bevorzugt erfolgt die Fixierung in jede radiale Richtung. Entsprechend verläuft die zweite Stützfläche bevorzugt um den Lagersitzring herum und ist in sich geschlossen. Der Lagersitzring befindet sich innerhalb der zweiten Stützfläche.

Die erste Stützfläche und die zweite Stützfläche sind bevorzugt in axialer Richtung versetzt zueinander angeordnet, sodass sie orthogonal zu der Drehachse des mindestens einen Lagers wirkende Torsionsmomente aufnehmen können.

Die erste und die gegebenenfalls vorhandene zweite Stützfläche sind bevorzugt zu der Drehachse des mindestens einen Lagers rotationssymmetrisch. Insbesondere können die Stützflächen zylindrisch geformt sein. Zylindrische Stützflächen fixieren den Lagersitzring ausschließlich radial. In einer bevorzugten Weiterbildung fixieren aber die erste Stützfläche und/oder die zweite Stützfläche den Lagersitzring nicht nur radial, sondern auch in genau eine Axialrichtung. Die erste Stützfläche und/oder die zweite Stützfläche bilden also einen axialen Anschlag für den Lagersitzring. Bevorzugt sind die erste Stützfläche und/oder die zweite Stützfläche zu diesem Zweck konisch ausgeführt.

In einer darüber hinaus bevorzugten Weiterbildung weist der Lagersitzring einen Schraubflansch auf, mit dem er in der gehäusefesten Struktur verschraubt ist. Der Schraubflansch dient der axialen Fixierung des Lagersitzrings. Insbesondere ist es möglich, den Lagersitzring mittels des Schraubflansches gegen den oben genannten, durch die erste Stützfläche und/oder die zweite Stützfläche gebildeten axialen Anschlag zu verspannen.

Der Schraubflansch ist bezüglich der ersten Stützfläche und der gegebenenfalls vorhandenen zweiten Stützfläche axial in Richtung des Ausgangs des Getriebes versetzt angeordnet. In einer bevorzugten Weiterbildung befindet sich der Schraubflansch außerhalb des Getriebes. Dies bedeutet, dass der Schraubflansch außerhalb des Gehäuses des Getriebes angeordnet ist. Ein derartiger Schraubflansch wird erst durch die erfindungsgemäße Stützfläche ermöglicht. Er ist hinsichtlich der Zugänglichkeit bei Wartungs- und Reparaturarbeiten von großem Vorteil.

Bevorzugt ist das Getriebe derart weitergebildet, dass die Ausgangswelle ausschließlich mittels des mindestens einen Lagers gelagert ist. Neben dem mindestens einen Lager existiert also kein weiteres Lager, mit dem die Ausgangswelle gelagert ist.

In einer bevorzugten Weiterbildung weist die Ausgangswelle eine erste Verzahnung auf. Die Ausgangswelle ist bevorzugt als Hohlwelle ausgestaltet. In diesem Fall handelt es sich bei der ersten Verzahnung um eine Innenverzahnung, die sich im Inneren der Hohlwelle befindet. Eine weitere Welle des Getriebes weist eine zweite Verzahnung auf, die mit der ersten Verzahnung eine Passverzahnung bildet. Ist die erste Verzahnung als Innenverzahnung ausgestaltet, handelt es sich bei der zweiten Verzahnung um eine Außenverzahnung. Über die Passverzahnung ist es möglich, ein Drehmoment von der weiteren Welle zu der Ausgangswelle zu übertragen. Bei der weiteren Welle handelt es sich etwa eine Sonnenwelle einer ausgangsseitigen Planetenstufe des Getriebes.

Das oben beschriebene Getriebe eignet sich besonders für die Verwendung in einem integrierten Antriebsstrang. Eine entsprechende Anordnung weist neben dem Getriebe einen Generator auf, dessen Rotor auf der Ausgangswelle fixiert ist. Der Rotor ist drehfest mit der Ausgangswelle verbunden. Bevorzugt wird der Rotor von der Ausgangswelle getragen, d.h. ist ausschließlich in dem Lagersitzring fixiert, sodass die Lagerung des Rotors ausschließlich mittels des mindestens einen Lagers erfolgt.

Bevorzugte Ausführungsbeispiele der Erfindung sind in den Figuren dargestellt. Im Einzelnen zeigt:
- Fig. 1: eine Schnittdarstellung eines integrierten Antriebsstrangs; und
- Fig. 2: eine Schnittdarstellung eines Lagersitzrings.

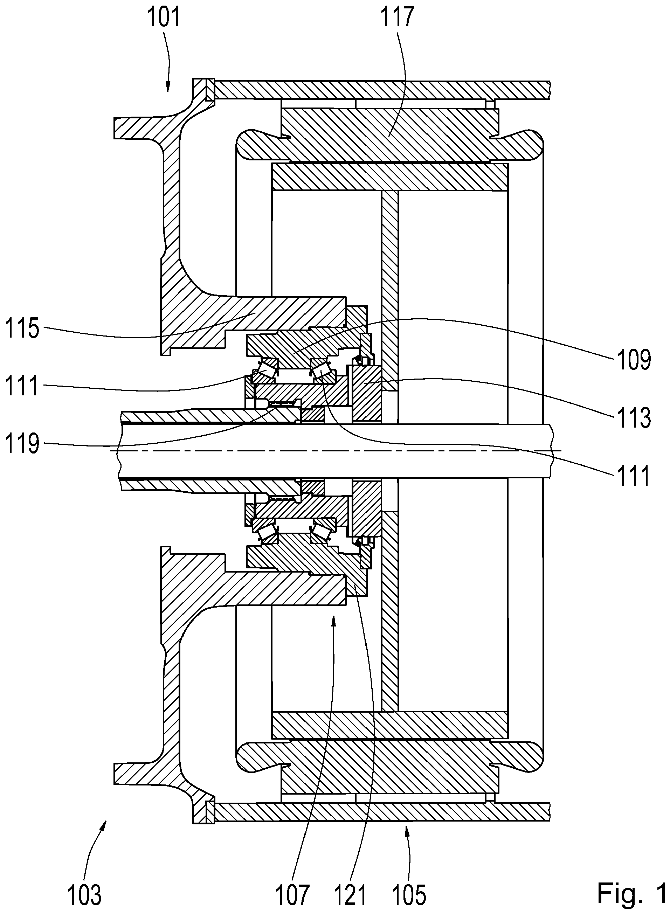

Der in Fig. 1 dargestellte Antriebsstrang 101 weist ein Getriebe 103 und einen Generator 105 auf. Axial zwischen dem Getriebe 103 und dem Generator 105 ist eine Lagerkassette 107 angeordnet. Diese weist einen Lagersitzring 109 und zwei Kegelrollenlager 111 auf. Die Kegelrollenlager 111 sind mit ihrem Außenring jeweils in dem Lagersitzring 109 fixiert. Die Innenringe der Lager 111 sind auf einer Hohlwelle 113 fixiert. Dadurch ist die Hohlwelle 113 drehbar in dem Lagersitzring 109 gelagert. Der Lagersitzring 109 wiederum ist in einem Gehäusefortsatz 115 fixiert.

Ein Rotor 117 des Generators 105 ist mit der Hohlwelle 113 verschraubt. Auf diese Weise trägt die Hohlwelle 113 den Rotor 117, und die Lagerkassette 107 dient als Lagerung für den Rotor 117. Neben den Kegelrollenlagern 111 existieren keine weiteren Lager, mit denen der Rotor 117 gelagert ist.

Die Hohlwelle 113 bildet eine Innenverzahnung 119 aus. In diese greift die Außenverzahnung einer in Fig. 1 nicht dargestellten Sonnenwelle ein. Es entsteht eine Passverzahnung, über die ein Drehmoment von der Sonnenwelle zu der Hohlwelle 113 übertragen werden kann.

Der Gehäusefortsatz 115 besitzt eine hohlzylindrische Grundform. Der Lagersitzring 109 ist in den Gehäusefortsatz 115 eingesteckt, sodass der Gehäusefortsatz 115 den Lagersitzring 109 in Umfangsrichtung umschließt und radial fixiert.

Der Lagersitzring 109 bildet einen Schraubflansch 121 aus. Mit diesem ist der Lagersitzring 109 mit dem Gehäusefortsatz 115 verschraubt. Durch diese Anordnung des Schraubflansches ist es möglich, die gehäusefeste Struktur mit Versteifungen zu versehen, welche die Lagerkassette stabilisieren

Der Schraubflansch 121 ist generatorseitig angeordnet. Dadurch lässt sich die Lagerkassette 107 im Wartungs- oder Reparaturfall durch den Generator 105 hindurch entnehmen bzw. einsetzen. Durch die generatorseitige Anordnung des Schraubflansches ist es zudem möglich, die gehäusefeste Struktur mit Versteifungen zu versehen, welche die Lagerkassette stabilisieren

### Bezugszeichen

- 101: Antriebsstrang
- 103: Getriebe
- 105: Generator
- 107: Lagerkassette
- 109: Lagersitzring
- 111: Kegelrollenlager
- 113: Hohlwelle
- 115: Gehäusefortsatz
- 117: Rotor
- 119: Innenverzahnung
- 121: Schraubflansch

## Patentansprüche

1. Getriebe (103) aufweisend eine gehäusefeste Struktur (115) und eine Lagerkassette (107) mit einem Lagersitzring (109) und mindestens einem Lager (111); wobei eine Ausgangswelle (113) des Getriebes (103) mittels des mindestens einen Lagers(111) drehbar in dem Lagersitzring (109) gelagert ist; **dadurch gekennzeichnet, dass**
die gehäusefeste Struktur (115) eine erste Stützfläche bildet; wobei
die erste Stützfläche den Lagersitzring (109) von außen umschließt und mindestens radial fixiert.

2. Getriebe (103) nach Anspruch 1; **dadurch gekennzeichnet, dass**
die gehäusefeste Struktur (115) eine zweite Stützfläche bildet; wobei
die zweite Stützfläche den Lagersitzring (109) von außen umschließt und mindestens radial fixiert.

3. Getriebe (103) nach einem der vorhergehenden Ansprüche; **dadurch gekennzeichnet, dass**
die erste Stützfläche und/oder die zweite Stützfläche den Lagersitzring (109) in genau eine axiale Richtung fixiert.

4. Getriebe (103) nach einem der vorhergehenden Ansprüche; **dadurch gekennzeichnet, dass**
der Lagersitzring (109) einen Schraubflansch (121) aufweist, mit dem er mit der gehäusefesten Struktur (115) verschraubt ist.

5. Getriebe (103) nach dem vorhergehenden Anspruch; **dadurch gekennzeichnet, dass**
der Schraubflansch (115) außerhalb des Getriebes (103) angeordnet ist.

6. Getriebe (103) nach einem der vorhergehenden Ansprüche; **dadurch gekennzeichnet, dass**
die Ausgangswelle (113) ausschließlich mittels des mindestens einen Lagers (111) gelagert ist.

7. Getriebe (103) nach einem der vorhergehenden Ansprüche; wobei
die Ausgangswelle (113) eine erste Verzahnung (119) aufweist; wobei
eine weitere Welle des Getriebes eine zweite Verzahnung aufweist; wund wobei
die erste Verzahnung (119) und die zweite Verzahnung eine Passverzahnung bilden.

8. Anordnung mit einem Getriebe (103) nach einem der vorhergehenden Ansprüche;
**gekennzeichnet durch**
einen Generator; wobei
ein Rotor des Generators auf der Ausgangswelle (113) fixiert ist.

## Geänderte Patentansprüche

### Geänderte Patentansprüche gemäss Regel 137(2) EPÜ.

1. Getriebe (103) aufweisend eine gehäusefeste Struktur (115) und eine Lagerkassette (107) mit einem Lagersitzring (109) und mindestens einem Lager (111); wobei eine Ausgangswelle (113) des Getriebes (103) mittels des mindestens einen Lagers(111) drehbar in dem Lagersitzring (109) gelagert ist; wobei die gehäusefeste Struktur (115) eine erste Stützfläche bildet; wobei die erste Stützfläche den Lagersitzring (109) von außen umschließt und mindestens radial fixiert; **dadurch gekennzeichnet, dass**
die Ausgangswelle (113) ausschließlich mittels des mindestens einen Lagers (111) gelagert ist.

2. Getriebe (103) nach Anspruch 1; **dadurch gekennzeichnet, dass** die gehäusefeste Struktur (115) eine zweite Stützfläche bildet; wobei die zweite Stützfläche den Lagersitzring (109) von außen umschließt und mindestens radial fixiert.

3. Getriebe (103) nach einem der vorhergehenden Ansprüche; **dadurch gekennzeichnet, dass**
die erste Stützfläche und/oder die zweite Stützfläche den Lagersitzring (109) in genau eine axiale Richtung fixiert.

4. Getriebe (103) nach einem der vorhergehenden Ansprüche; **dadurch gekennzeichnet, dass**
der Lagersitzring (109) einen Schraubflansch (121) aufweist, mit dem er mit der gehäusefesten Struktur (115) verschraubt ist.

5. Getriebe (103) nach dem vorhergehenden Anspruch; **dadurch gekennzeichnet, dass**
der Schraubflansch (115) außerhalb des Getriebes (103) angeordnet ist.

6. Getriebe (103) nach einem der vorhergehenden Ansprüche; wobei die Ausgangswelle (113) eine erste Verzahnung (119) aufweist; wobei eine weitere Welle des Getriebes eine zweite Verzahnung aufweist; wund wobei die erste Verzahnung (119) und die zweite Verzahnung eine Passverzahnung bilden.

7. Anordnung mit einem Getriebe (103) nach einem der vorhergehenden Ansprüche; **gekennzeichnet durch**
einen Generator; wobei
ein Rotor des Generators auf der Ausgangswelle (113) fixiert ist.
